Europäisches Patentamt

European Patent Office

Office européen des brevets

(19)

(11) Publication number: **0 112 053**
**B1**

(12) **EUROPEAN PATENT SPECIFICATION**

(45) Date of publication of patent specification: **27.08.86**

(51) Int. Cl.⁴: **B 01 D 53/14**, B 01 D 47/00

(21) Application number: **83307001.4**

(22) Date of filing: **16.11.83**

(54) Mineral oil based scrubbing liquid composition.

(30) Priority: **18.11.82 GB 8232906**

(43) Date of publication of application:
**27.06.84 Bulletin 84/26**

(45) Publication of the grant of the patent:
**27.08.86 Bulletin 86/35**

(84) Designated Contracting States:
**CH DE FR GB IT LI**

(56) References cited:
**EP-A-0 050 106
DE-C-1 134 367
US-A-4 102 983
US-A-4 118 344**

(73) Proprietor: **Exxon Research and Engineering Company
P.O.Box 390 180 Park Avenue
Florham Park New Jersey 07932 (US)**

(72) Inventor: **Lukaschek, Gunther
Dirkenshof 6A
D-2105 Seevetal 2 (DE)**
Inventor: **Runge, Gerhard
Moorweg 6B
D-2071 Ammersbek 1 (DE)**

(74) Representative: **Pitkin, Robert Wilfred et al
ESSO Engineering (Europe) Ltd. Patents & Licences Apex Tower High Street
New Malden Surrey KT3 4DJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a mineral oil based scrubbing liquid composition suitable for use in removing hydrocarbons and/or other organic compound impurities from a process exhaust gas or from waste air. More especially the composition of the invention is suitable for purifying such exhaust gas or waste air to separate pollutant hydrocarbons etc. which are present in gaseous form and/or in entrained droplet form.

Exhaust gas and/or waste air containing hydrocarbons as impurities occur in various manufacturing processes, for example, metal-working operations, more especially metal-rolling. There are at least two aspects which have to be considered, namely, the pollution effect on the environment and the loss of material which could profitably and advantageously be re-used.

Techniques and apparatus exist to scrub waste gases and/or exhaust air containing hydrocarbons and other organic compound impurities. Scrubbing with mineral oil containing an antioxidant is known, for example. However, even with the best of the known once-through, or recycling, techniques and apparatus it is very difficult to achieve a target figure of less than 50 mg/m$^3$ of organic compound impurities when calculated as carbon.

With increasingly stringent anti-pollution legislation being introduced in many countries there is a requirement for an improved scrubbing composition which can be used in the removal of gaseous and/or liquid hydrocarbons etc. from the exhaust gas or waste air from a manufacturing process, for example, the rolling of metal. Moreover, such a scrubbing composition should be capable of being used under existing working conditions and plant dimensions, capacities, etc.

In accordance with the present invention there is provided a mineral oil based scrubbing liquid composition suitable for use in removing hydrocarbons and/or other organic compounds impurities from a contaminated gas, which composition is characterised by containing:

(i) at least 95 wt% of at least one mineral oil which essentially wholly distils between a lower temperature which is not less than 250°C and an upper temperature which is not above 600°C;

(ii) 0.05 to 0.5 wt% in total of at least one anti-oxidant compound; and

(iii) an amount up to 1.0 wt% in total of one or more additives to improve absorption of impurities, which additives are either (a) one or more ionic or non-ionic surface active agents or (b) said surface active agent(s) with one or more oil-soluble polymers having a minimum number average molecular weight of 15,000.

Preferred mineral oils are those having a lower distillation temperature of at least 300°C and an upper of at most 550°C. It is also preferred that the mineral oils used in the compositions of this invention are paraffinic mineral oils and/or are highly solvent refined oils.

The mineral oil content of a composition according to the present invention is very high, being at least 95 wt% and preferably at least 97 wt%, and the additive(s) content is very low. This is in total contrast to the mineral oil containing absorption compositions disclosed and discussed in US—A—4 102 983. The compositions thereof employ a mineral oil which has a boiling range of 250°C to 450°C under normal pressure. The oil is employed in an amount of 0.1 to 75 wt% of the composition. The remaining 99.9 to 25 wt% of the composition comprises one or more additives, which additives are different from those employed in the present invention.

The preferred antioxidant compound(s) are sterically hindered phenols, for example, those sold under the Trade Names "Ethyl 702" and "Irganox L130". Amine compound antioxidants, for example that sold under the Trade Name "Irganox L 57", may additionally or alternatively be employed.

Preferred non-ionic surface active agents are fatty alcohol polyglycol ethers, for example, those sold under the Trade Name "Emulsogen". Others are polyoxyalkyl ethers and alkylphenol polyoxyethylene ethers.

Preferred ionic surface active agents employable in the composition of the invention are (1) metal (especially alkali or alkaline earth metal, preferably sodium) sulphonates: by which are meant, for example, by-products of white oil manufacture and lube stock manufacture, salts of mahogany acids such as can, for instance, be derived from petroleum refinery sources: and/or (2) metal (especially alkali or alkaline earth metal, preferably sodium) synethetic sulphonation feedstock. These include alkyl and alkaryl sulphonates, for example, toluene sulphonates, xylene sulphonates and also alkyl benzene sulphonates. Sodium alkylbenzene sulphonates are especially suitable. Generally, the alkyl groups contain 8 to 30 carbon atoms, preferably 12 to 24, and may be branched or straight chain.

When an oil-soluble polymer is employed then it is preferred that it is an olefinic homopolymer or copolymer, but may also be, for example, a polyester. The minimum number average molecular weight of the polymer is 15,000, normally 20,000. The number average molecular weights referred to in this specification are those determined by comparison with commercially available standard samples of polystyrene of known number average molecular weights. Examples of suitable polymers are polybutenes, polyisobutenes, polymethacrylates. One commercially available polyisobutene is that sold under the Trade Name "Paratone". Suitable polymethacrylates are those sold under the Trade Names "Viscoplex" and "Plexol".

Normally from 0.08 to 0.5 wt% in total of the antioxidant compound(s) will be employed, suitably 0.08 to 0.12 wt% and preferably 0.1 wt%.

The surface active agent(s) will normally be present in amounts of up to 0.5 wt%, suitably from 0.03 to 0.2 wt%. The polymer(s) if used, may be present in total amount of up to 0.8 wt%, normally up to 0.5 wt%, suitably 0.03 to 0.4 wt%, preferably 0.05 to 0.3 wt%.

It is preferred to employ both a said surface active compound and a said polymer. The scrubbing composition of the present invention may, if desired, also contain small amounts of one or more conventional additives, for example, pour depressants and anti-corrosion compounds suitable for use with non-ferrous materials. The total amount of all such optional conventional additives will not exceed 1.0 wt% in preferred compositions.

Two preferred classes of compositions in accordance with the invention are (a) those having a said mineral oil content of 99.75 to 99.85 wt% and a said antioxidant content of 0.1 wt%; the remainder being the said surface active agent(s); and (b) those having a said mineral oil content of 99.45 to 99.8 wt%, 0.1 wt% of said antioxidant, 0.05 to 0.15 wt% of said surface active agent(s), and 0.05 to 0.3 wt% of said oil-soluble polymer(s). It is to be understood that the amounts selected in each of the ranges in (a) and (b) must be such that the sum total is 100%.

Although a composition in accordance with this invention can be used as the sole scrubbing liquid, it is employed to better advantage as a second stage treatment liquid for the treatment of gases which have already received a conventional washing. This will more especially be the case where the composition is to be used in metal-working plants, for example, rolling mills.

A composition of the invention is capable of being employed in a cyclic manner, whereby it is used, then treated and then recycled. Thus, having been used as a scrubbing liquid the contaminated composition is removed to a tank or like means where solid contamination is removed and impurities are stripped out. The cleansed composition is then pumped back for scrubbing further contaminated exhaust gas or waste air. The composition of the invention stands up well to continued recycling, with only small losses of active ingredients and of the mineral oil base.

The following non-limitative examples are given by way of illustration of the invention:—

Example 1
A scrubbing composition was prepared having the following components and weights thereof:—

| | |
|---|---|
| Paraffinic based petroleum mineral oil, boiling substantially wholly in the range 300°C to 550°C. | 99.8 wt% |
| Antioxidant (being a sterically hindered phenol). | 0.1 wt% |
| Surface active agent (being a monosodium sulphonate). | 0.1 wt% |

The composition reduced the amount of organic compounds in a waste air source from 48 mg carbon/m³ air to 24 mg carbon/m³ air, at comparable air flow and treatment conditions.

Example 2
A scrubbing composition was prepared having the following components and weights thereof:—

| | |
|---|---|
| Mineral oil as in Example 1 | 99.6 wt% |
| Antioxidant as in Example 1 | 0.1 wt% |
| Surface active agent as in Example 1 | 0.1 wt% |
| Oil-soluble polymer | 0.2 wt% |

This composition gave a somewhat higher percentage reduction of impurities than the composition of Example 1.

In these two examples the initial contaminant level of the waste air was at about the final level achievable with conventional mineral oil based scrubbing liquids. The treatment with compositions in accordance with the invention clearly very significantly further reduces the contaminant level.

## Claims

1. A mineral oil based scrubbing liquid composition suitable for use in removing hydrocarbons and/or other organic compounds impurities from a contaminated gas, which composition is characterised by containing:
(i) at least 95 wt% of at least one mineral oil which essentially wholly distils between a lower temperature which is not less than 250°C and an upper temperature which is not above 600°C;
(ii) 0.05 to 0.5 wt% in total of at least one antioxidant compound; and
(iii) an amount up to 1.0 wt% in total of one or more additives, which additives are either (a) one or more ionic or non-ionic surface active agents or (b) said surface active agent(s) with one or more oil-soluble polymers having a minimum number average molecular weight of 15,000.

2. A composition as claimed in claim 1, wherein a total of from 0.08 to 0.12 wt% of the antioxidant(s) is present.

3. A composition as claimed in claim 1 or claim 2, wherein the antioxidant is at least one sterically hindered phenolic compound.

4. A composition as claimed in any preceding claim wherein a total of from 0.03 to 0.2 wt% of a said ionic or non-ionic surface active agent(s) is present.

5. A composition as claimed in claim 4 wherein the surface active agent is an alkylbenzene sulphonate.

6. A composition as claimed in any preceding claim, wherein at least one said polymer is also present.

7. A composition as claimed in claim 6, wherein the oil-soluble polymer is an olefin homo- or co-polymer.

8. A composition as claimed in claim 6, wherein the oil-soluble polymer is a polyester.

9. A composition as claimed in claim 6 or claim 7 or claim 8, wherein the oil-soluble polymer is present in a total amount of from 0.03 to 0.4 wt%.

10. The use, in a process of removing hydrocarbons and/or other organic compounds impurities from a contaminated gas, of a composition as claimed in any preceding claim.

## Patentansprüche

1. Auf Mineralöl basierende Waschflüssigkeitszusammensetzung, die zur Verwendung bei der Entfernung von Kohlenwasserstoffen und/oder Verunreinigungen aus anderen organischen Verbindungen aus einem verunreinigten Gas geeignet ist, dadurch gekennzeichnet, daß sie

   i) mindestens 95 Gew.% mindestens eines Mineralöls, das im wesentlichen vollständig zwischen einer unteren Temperatur von nicht weniger als 250°C und einer oberen Temperatur von nicht über 600°C destilliert,

   ii) insgesamt 0,05 bis 0,5 Gew.% mindestens einer Antioxidationsmittelverbindung und

   iii) insgesamt eine Menge von bis zu 1 Gew.% eines oder mehrerer Additive enthält, wobei die Additive entweder (a) ein oder mehrere ionische oder nichtionische Tenside oder (b) dieses (diese) Tensid (Tenside) mit einem oder mehreren öllöslichen Polymeren mit einem zahlenmäßigen durchschnittlichen Mindestmolekulargewicht von 15000 sind.

2. Zusammensetzung nach Anspruch 1, dadurch gekennzeichnet, daß insgesamt 0,08 bis 0,12 Gew.% des (der) Antioxidationsmittels (Antioxidationsmittel) vorhanden sind.

3. Zusammensetzung nach Anspruch 1 oder 2, dadurch gekennzeichnet, daß das Antioxidationsmittel mindestens eine sterisch gehinderte phenolische Verbindung ist.

4. Zusammensetzung nach einem der vorangehenden Ansprüche, dadurch gekennzeichnet, daß insgesamt 0,03 bis 0,2 Gew.% des (der) ionischen oder nichtionischen Tensids (Tenside) vorhanden sind.

5. Zusammensetzung nach Anspruch 4, dadurch gekennzeichnet, daß das Tensid ein Alkylbenzolsulfonat ist.

6. Zusammensetzung nach einem der vorangehenden Ansprüche, dadurch gekennzeichnet, daß mindestens eines der Polymeren ebenfalls vorhanden ist.

7. Zusammensetzung nach Anspruch 6, dadurch gekennzeichnet, daß das öllösliche Polymer ein Olefinhomo- oder -copolymer ist.

8. Zusammensetzung nach Anspruch 6, dadurch gekennzeichnet, daß das öllösliche Polymer ein Polyester ist.

9. Zusammensetzung nach Anspruch 6 oder 7 oder 8, dadurch gekennzeichnet, daß das öllösliche Polymer in einer Gesamtmenge von 0,03 bis 0,4 Gew.% vorhanden ist.

10. Verwendung einer Zusammensetzung gemäß einem der vorangehenden Ansprüche in einem Verfahren zur Entfernung von Kohlenwasserstoffen und/oder Verunreinigungen aus anderen organischen Verbindungen aus einem verunreinigten Gas.

## Revendications

1. Une composition de lavage liquide à base d'huile minérale utilisable pour l'élimination d'hydrocarbures et/ou d'autres impuretés constituées de composés organiques d'un gaz pollué, cette composition étant caractérisée en ce qu'elle contient:

   (i) au moins 95% en poids d'au moins une huile minérale qui distille pratiquement en totalité entre une température inférieure qui n'est pas au-dessous de 250°C et une température supérieure qui n'est pas au-dessus de 600°C;

   (ii) 0,05 à 0,5% en poids au total d'au moins un composé antioxydant;

   (iii) une quantité allant jusqu'à 1,0% en poids au total d'un ou de plusieurs additifs, ces additifs étant soit (a) un ou plusieurs agents tensioactifs ioniques ou non-ioniques, soit (b) ce ou ces agents tensioactifs avec un ou plusieurs polymères solubles dans l'huile ayant un poids moléculaire moyen en nombre d'au moins 15.000.

2. Une composition comme revendiquée dans la revendication 1, dans laquelle un total de 0,08 à 0,12% en poids d'antioxydant(s) est présent.

3. Une composition comme revendiquée dans la revendication 1 ou 2, dans laquelle l'antioxydant est au moins un composé phénolique présentant un empêchement stérique.

4. Une composition comme revendiquée dans l'une quelconque des revendications précédentes, dans laquelle un total de 0,03 à 0,2% en poids du ou des agents tensio-actifs ioniques ou non-ioniques est présent.

5. Une composition comme revendiquée dans la revendication 4, dans laquelle l'agent tensioactif est un alkylbenzène sulfonate.

6. Une composition comme revendiquée dans l'une quelconque des revendications précédentes, dans laquelle au moins un polymère est aussi présent.

7. Une composition comme revendiquée dans la revendication 6, dans laquelle le polymère soluble dans l'huile est un homo- ou copolymère d'oléfine.

8. Une composition comme revendiquée dans la revendication 6, dans laquelle le polymère soluble dans l'huile est un polyester.

9. Une composition comme revendiquée dans la revendication 6, 7 ou 8, dans laquelle le polymère soluble dans l'huile est présent en quantité totale de 0,03 à 0,4% en poids.

10. L'emploi, dans un procédé d'élimination d'hydrocarbures et/ou d'autres impuretés constituées de composés organiques d'un gaz pollué, d'une composition comme revendiqué dans l'une quelconque des revendications précédentes.